# EUROPEAN PATENT SPECIFICATION

(11) **EP 4 005 187 B1**
(45) Date of publication and mention of the grant of the patent: **18.10.2023**
(21) Application number: 20750893.8
(22) Date of filing: 07.07.2020
(51) Int. Cl.: H04L 67/025, H04L 67/1061, H04L 43/065, H04L 43/0811, G06F 11/30, H04L 41/0631, H04L 41/0654, H04L 41/40, H04L 43/20, G06F 11/07

(54) **PEER DISCOVERY PROCESS FOR DISCONNECTED NODES IN A SOFTWARE DEFINED NETWORK**
PEER-ERKENNUNGSVERFAHREN FÜR NICHT VERBUNDENE KNOTEN IN EINEM SOFTWAREDEFINIERTEN NETZWERK
PROCESSUS DE DÉCOUVERTE PAR LES PAIRS POUR LES NOEUDS DÉCONNECTÉS DANS UN RÉSEAU DÉFINI PAR LOGICIEL

(30) Priority: 30.07.2019 US 201916526722
(43) Date of publication of application: 01.06.2022
(73) Proprietor: Cisco Technology, Inc., San Jose, CA 95134 (US)
(72) Inventor: PRABHU, Vinay, Milpitas, CA 95035 (US); EVANS, Sarah, Adelaide, San Jose, CA 95126 (US); PAREKH, Jigar, Dinesh, Fremont, CA 94539 (US); RANGASWAMY, Suraj, San Jose, CA 95134 (US)
(74) Representative: Warren, Caroline Elisabeth
(86) International application number: PCT/US2020/041034
(87) International publication number: WO 2021/021395

(56) References cited:
- US-A1- 2007 118 568
- US-A1- 2009 323 537
- US-A1- 2018 270 105

## Description

### TECHNICAL FIELD

The subject matter of this disclosure relates in general to the field of computer networking, and more particularly, to systems and methods for a peer discovery process of in accessible/disconnected nodes in software defined networks.

### BACKGROUND

A campus network can be a Software Defined Network (SD-WAN) that provides connectivity to computing devices (e.g., servers, workstations, desktop computers, laptop computers, tablets, mobile phones, etc.) and things (e.g., desk phones, security cameras, lighting, heating, ventilating, and air-conditioning (HVAC), windows, doors, locks, medical devices, industrial and manufacturing equipment, etc.) within environments such as offices, hospitals, colleges and universities, oil and gas facilities, factories, and similar locations. Some of the unique challenges a campus network may face include integrating wired and wireless devices, on-boarding computing devices and things that can appear anywhere in the network and maintaining connectivity when the devices and things migrate from location to location within the network, supporting bring your own device (BYOD) capabilities, connecting and powering Internet-of-Things (IoT) devices, and securing the network despite the vulnerabilities associated with Wi-Fi access, device mobility, BYOD, and IoT.

Monitoring device and node operations in SD-WANs is possible through a network management component called vManage. Through vManage, network administrators can monitor and debug the network, identify disconnected nodes and debug/fix them. vManage relies on control plane connections between controllers and edge routers (vEdge) in the network to gather data on health of controller nodes in the network such as edge routers and controllers (e.g., vSmart components). However, if such control plane connection is lost, vManage would no longer be able to receive the health data in order to identify disconnected nodes.

US 2009/323537 discloses a network failure detection technique. US 2007/118568 discloses a network operation management system. US 2018/270105 discloses handling control-plane connectivity loss in virtualized computing environments.

### BRIEF DESCRIPTION OF THE FIGURES

To provide a more complete understanding of the present disclosure and features and advantages thereof, reference is made to the following description, taken in conjunction with the accompanying drawings, in which:
FIG. 1 illustrates a network architecture, according to an aspect of the present disclosure
FIG. 2 illustrates an example of a network environment for network architecture of FIG. 1, according to an aspect of the present disclosure
FIG. 3 describes a process of panic peer discovery after control plane loss of connectivity in network of FIGs. 1 and 2, according to an aspect of the present disclosure, and
FIGS. 4A-B illustrate examples of systems, according to an aspect of the present disclosure.

### DESCRIPTION OF EXAMPLE EMBODIMENTS

Aspects of the invention are recited in the independent claims and preferred features are recited in the dependent claims.

Various example embodiments of the disclosure are discussed in detail below. While specific implementations are discussed, it should be understood that this is done for illustration purposes only. A person skilled in the relevant art will recognize that other components and configurations may be used without parting from the scope of the invention as defined in the appended claims. Thus, the following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be references to the same embodiment or any embodiment; and, such references mean at least one of the embodiments.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are necessarily separate or alternative embodiments mutually exclusive of other embodiments. Moreover, various features are described which may be exhibited by some embodiments and not by others.

Without intent to limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

The detailed description set forth below is intended as a description of various configurations of embodiments and is not intended to represent the only configurations in which the subject matter of this disclosure can be practiced. The appended drawings are incorporated herein and constitute a part of the detailed description. The detailed description includes specific details for the purpose of providing a more thorough understanding of the subject matter of this disclosure. However, it will be clear and apparent that the subject matter of this disclosure is not limited to the specific details set forth herein and may be practiced without these details. In some instances, structures and components are shown in block diagram form in order to avoid obscuring the concepts of the subject matter of this disclosure.

### OVERVIEW

Aspects of the invention are set out in the independent claims and preferred features are set out in the dependent claims.

### DETAILED DESCRIPTION

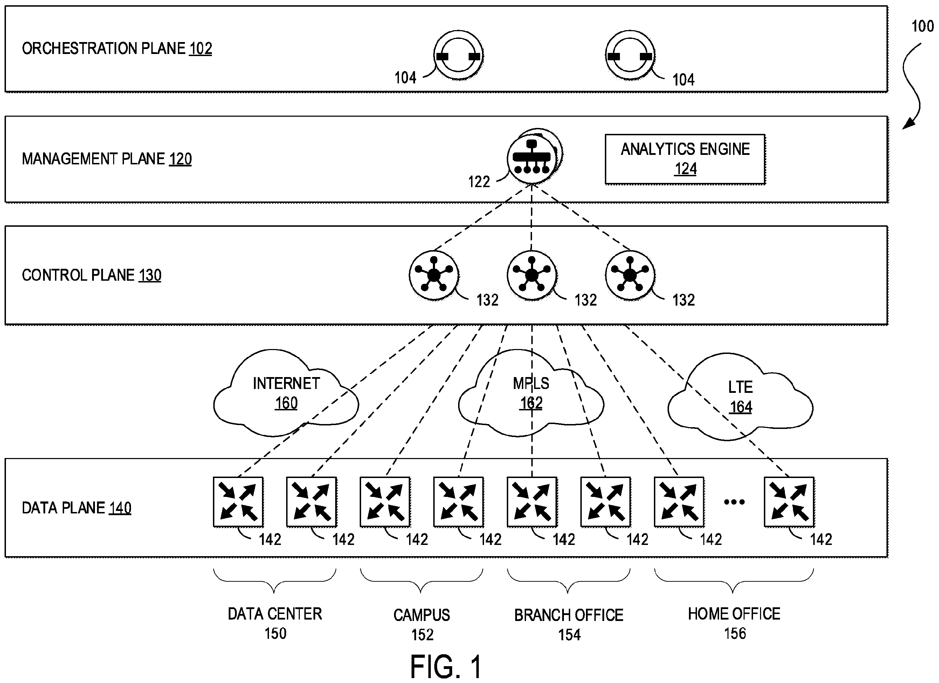

Before describing a panic peer selection process briefly mentioned above, some examples of the physical and logical architectures of a SD-WAN as an enterprise network will be described with reference to FIGs. 1-3.

FIG. 1 illustrates a network architecture, according to an aspect of the present disclosure. An example of an implementation of the network architecture 100 is the Cisco^{®} Software Defined Wide Area Network (SD-WAN) architecture. However, one of ordinary skill in the art will understand that, for the network architecture 100 and any other system discussed in the present disclosure, there can be additional or fewer component in similar or alternative configurations. The illustrations and examples provided in the present disclosure are for conciseness and clarity. Other example embodiments may include different numbers and/or types of elements but one of ordinary skill the art will appreciate that such variations do not depart from the scope of the present disclosure.

In this example, network architecture 100 can comprise an orchestration plane 102, a management plane 120, a control plane 130, and a data plane 140. Orchestration plane 102 can assist in the automatic on-boarding of edge network devices 142 (e.g., switches, routers, etc.) in an overlay network. Orchestration plane 102 can include one or more physical or virtual network orchestrator appliances 104. Network orchestrator appliances 104 can perform the initial authentication of edge network devices 142 and orchestrate connectivity between devices of control plane 130 and data plane 140. In some example embodiments, network orchestrator appliances 104 can also enable communication of devices located behind Network Address Translation (NAT). In some example embodiments, physical or virtual Cisco^{®} SD-WAN vBond appliances can operate as network orchestrator appliances 104.

Management plane 120 can be responsible for central configuration and monitoring of a network. Management plane 120 can include one or more physical or virtual network management appliances 122. Network management appliances 122 can provide centralized management of the network via a graphical user interface to enable a user to monitor, configure, and maintain edge network devices 142 and links (e.g., Internet transport network 160, Multi-Protocol Label Switching (MPLS) network 162, 4G/LTE network 164) in an underlay and overlay network. The network management appliances 122 can support multi-tenancy and enable centralized management of logically isolated networks associated with different entities (e.g., enterprises, divisions within enterprises, groups within divisions, etc.). Alternatively or in addition, network management appliances 122 can be a dedicated network management system for a single entity. In some example embodiments, physical or virtual Cisco^{®} SD-WAN vManage appliances can operate as network management appliances 122.

Management plane 120 can also include an analytics engine 124 for providing visibility into the performance of applications and the network over time, such as the best and worst performing applications, the most bandwidth consuming applications, anomalous applications families (e.g., applications whose bandwidth consumption change over a period of time), network availability and circuit availability, carrier health, best and worst performing tunnels, and so forth. Analytics engine 124 may generate graphical representations of an overlay network and enable users to drill down to display the characteristics of a single carrier, tunnel, or application at a particular time and can present the same to a network administrator via a user interface of network management appliances 122 (e.g., vManage). The user interface can serve as an interactive overview of the network and an entrance point for more details. In some example embodiments, the user interface can display information for the last 24 hours and enable a user to drill down to select different time periods for different data sets to display. The user interface can also display data for network availability, WAN performance by carrier, and applications, among other network analytics.

In some example embodiments, analytics engine 124 can provide application performance with a Virtual Quality of Experience (vQoE) value, which can be customized for individual applications. This value can range from zero to ten, with zero being the worst performance and ten being the best. The analytics engine can calculate vQoE based on latency, loss, and jitter, and customize the calculation for each application.

Control plane 130 can build and maintain a network topology and make decisions on where traffic flows. Control plane 130 can include one or more physical or virtual network controller appliances 132. Network controller appliances 132 can establish secure connections to each edge network device 142 and distribute route and policy information via a control plane protocol (e.g., Overlay Management Protocol (OMP), Open Shortest Path First (OSPF), Intermediate System to Intermediate System (IS-IS), Border Gateway Protocol (BGP), Protocol-Independent Multicast (PIM), Internet Group Management Protocol (IGMP), Internet Control Message Protocol (ICMP), Address Resolution Protocol (ARP), Bidirectional Forwarding Detection (BFD), Link Aggregation Control Protocol (LACP), etc.). In some example embodiments, network controller appliances 132 can operate as route reflectors. Network controller appliances 132 can also orchestrate secure connectivity in data plane 140 between and among edge network devices 142. For example, in some example embodiments, network controller appliances 132 can distribute crypto key information among edge network devices 142. This can allow the network to support a secure network protocol or application (e.g., Internet Protocol Security (IPSec), Transport Layer Security (TLS), Secure Shell (SSH), etc.) without Internet Key Exchange (IKE) and enable scalability of the network. In some example embodiments, physical or virtual Cisco^{®} SD-WAN vSmart controllers can operate as the network controller appliances 132.

Data plane 140 can be responsible for forwarding packets based on decisions from control plane 130. Data plane 140 can include edge network devices 142, which can be physical or virtual network devices. Edge network devices 142 can operate at the edges of various network sites associated with an organization, such as in one or more data centers or colocation centers 150, campus networks 152, branch office networks 154, home office networks 156, and so forth, or in the cloud (e.g., Infrastructure as a Service (IaaS), Platform as a Service (PaaS), SaaS, and other cloud service provider networks). The edge network devices 142 can provide secure data plane connectivity among sites over one or more WAN transports, such as via one or more Internet transport networks 160 (e.g., Digital Subscriber Line (DSL), cable, etc.), MPLS networks 162 (or other private packet-switched network (e.g., Metro Ethernet, Frame Relay, Asynchronous Transfer Mode (ATM), etc.), mobile networks 164 (e.g., 3G, 4G/LTE, 5G, etc.), or other WAN technology (e.g., Synchronous Optical Networking (SONET), Synchronous Digital Hierarchy (SDH), Dense Wavelength Division Multiplexing (DWDM), or other fiber-optic technology; leased lines (e.g., T1/E1, T3/E3, etc.); Public Switched Telephone Network (PSTN), Integrated Services Digital Network (ISDN), or other private circuit-switched network; small aperture terminal (VSAT) or other satellite network; etc.). Edge network devices 142 can be responsible for traffic forwarding, security, encryption, quality of service (QoS), and routing (e.g., BGP, OSPF, etc.), among other tasks. In some embodiments, physical or virtual Cisco^{®} SD-WAN vEdge routers can operate as edge network devices 142.

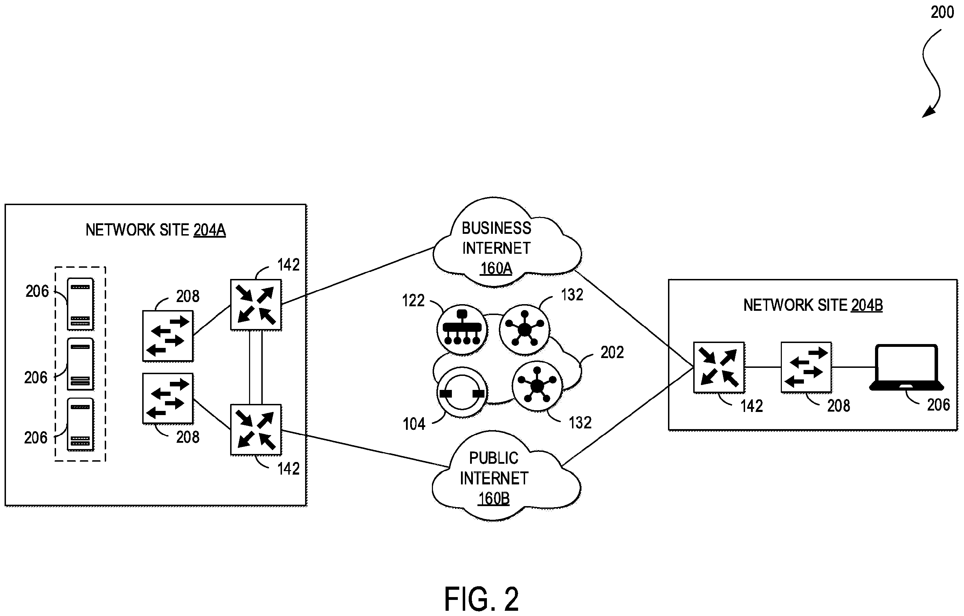

FIG. 2 illustrates an example of a network environment for network architecture of FIG. 1, according to an aspect of the present disclosure. Network environment 200 shows implementation of various aspects of network architecture 100. Network environment 200 can include a management network 202, a pair of network sites 204A and 204B (collectively, 204) (e.g., the data centers 150, the campus networks 152, the branch office networks 154, the home office networks 156, cloud service provider networks, etc.), and a pair of Internet transport networks 160A and 160B (collectively, 160). Management network 202 can include one or more network orchestrator appliances 104 (e.g., vBond appliance), one or more network management appliances 122 (e.g., vManage), and one or more network controller appliances 132 (vSmart or simply network controller). Although management network 202 is shown as a single network in this example, one of ordinary skill in the art will understand that each object of management network 202 can be distributed across any number of networks and/or be co-located with sites 204. In this example, each object of management network 202 can be reached through either transport network 160A or 160B.

Each site can include one or more endpoints 206 connected to one or more access network devices 208. Endpoints 206 can include general purpose computing devices (e.g., servers, workstations, desktop computers, etc.), mobile computing devices (e.g., laptops, tablets, mobile phones, etc.), wearable devices (e.g., watches, glasses or other head-mounted displays (HMDs), ear devices, etc.), and so forth. Endpoints 206 can also include Internet of Things (IoT) devices or equipment, such as agricultural equipment (e.g., livestock tracking and management systems, watering devices, unmanned aerial vehicles (UAVs), etc.); connected cars and other vehicles; smart home sensors and devices (e.g., alarm systems, security cameras, lighting, appliances, media players, HVAC equipment, utility meters, windows, automatic doors, door bells, locks, etc.); office equipment (e.g., desktop phones, copiers, fax machines, etc.); healthcare devices (e.g., pacemakers, biometric sensors, medical equipment, etc.); industrial equipment (e.g., robots, factory machinery, construction equipment, industrial sensors, etc.); retail equipment (e.g., vending machines, point of sale (POS) devices, Radio Frequency Identification (RFID) tags, etc.); smart city devices (e.g., street lamps, parking meters, waste management sensors, etc.); transportation and logistical equipment (e.g., turnstiles, rental car trackers, navigational devices, inventory monitors, etc.); and so forth.

Access network devices 208 can include physical or virtual switches, routers, and other network devices. Although site 204A is shown including a pair of access network devices and site 204B is shown including a single access network device in this example, access network devices 208 can comprise any number of network devices in any network topology, including multi-tier (e.g., core, distribution, and access tiers), spine-and-leaf, mesh, tree, bus, hub and spoke, and so forth. For example, in some embodiments, one or more data center networks may implement the Cisco^{®} Application Centric Infrastructure (ACI) architecture and/or one or more campus networks may implement the Cisco^{®} Software Defined Access (SD-Access or SDA) architecture. Access network devices 208 can connect endpoints 206 to one or more edge network devices 142, and edge network devices 142 can be used to directly connect to the transport networks 160.

In some example embodiments, each edge network device 142 can form a Datagram Transport Layer Security (DTLS) or TLS control connection with at least one of the network controller appliances 132 and connect to any network controller appliance 132 over each transport network 160. In some example embodiments, edge network devices 142 can also securely connect to edge network devices in other sites via IPSec tunnels. In some example embodiments, the BFD protocol may be used within each of these tunnels to detect loss, latency, jitter, and path failures.

As noted above, nodes of a network (e.g., edge network devices 142 and/or network controller appliances 132) may lose connectivity to network management appliances 122 over the control plane of a network. Network management appliances 122 relies on such control plane connections to receive data on health of edge network devices 142 and network control appliances 132 of the network, which in turn allows network management appliances 122 to take steps to monitor and/or debug any malfunctioning or down edge network device 142, network control appliances 132 and/or any other device or element of the network.

As will be described below, panic peer discovery process may be utilized such that when network management appliances 122 loses a control plane connection to an edge network device 142 and/or a network controller appliance 132 (which may be referred to as an inaccessible node), network management appliances 122 can reach such inaccessible node via a peer edge network device 142 and/or peer network controller appliance 132 (which may be referred to as a peer node) to receive data on health of the inaccessible node, which in turn allows network management appliances 122 to take steps to fix/debug any malfunctioning of the inaccessible node.

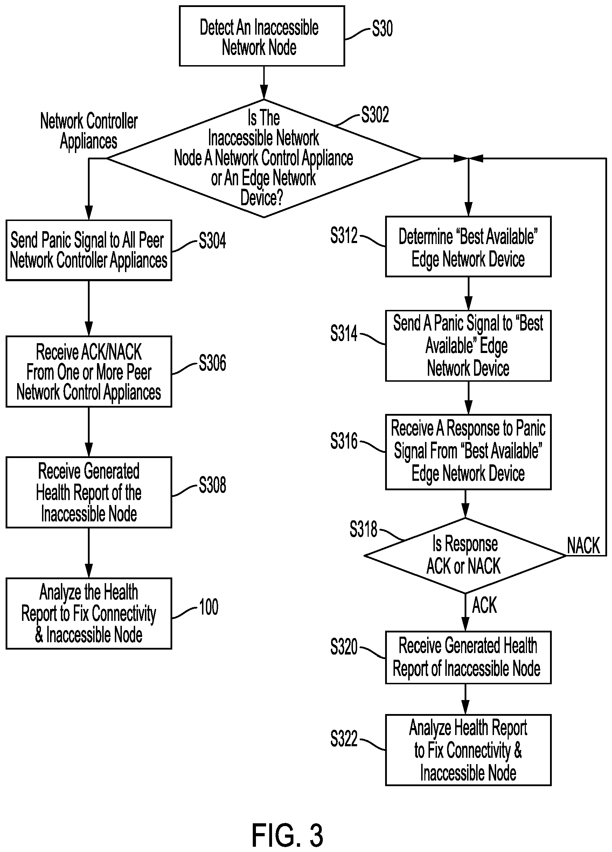

FIG. 3 describes a process of panic peer discovery after control plane loss of connectivity in network of FIGs. 1 and 2, according to an aspect of the present disclosure. FIG. 3 will be described from perspective of network management appliances 122 of FIG. 1. However, it will be understood that one or more processors corresponding to network management appliances 122 may execute computer-readable instructions stored in one or more associated memories to configure network management appliances 122 to implement panic peer discovery process of FIG. 3.

At S300, network management appliances 122 detect a loss of control plane connectivity to a network node such as an edge network device 142 (e.g., one or more vEdges) or network controller appliances 132 (e.g., one or more controller). In one example, network management appliances 122 can detect such loss of connectivity when no information or data is exchanged with such node for more than a threshold period of time (where such threshold can be a configurable parameter determined based on experiments and/or empirical studies). As noted, the network node with which control plane connectivity is lost may be referred to as an inaccessible node.

It should be noted that while FIG. 3 will be described with reference to detection of loss of connectivity to one edge network device or one network controller appliance, the method of FIG. 3 is equally applicable to detection of multiple (and/or simultaneous) losses of connectivity to multiple edge network devices and multiple network controller appliances.

At S302, network management appliances 122 determine the type of the inaccessible node. In other words, network management appliances 122 determine if the inaccessible node is an edge network device 142 or a network controller appliance 132. In one example, when a node is provisioned when it first joins the network, the type of the node is communicated to network management appliances 122. For security purposes, network management appliances 122 may be provisioned with certain certificate serial numbers of what type of nodes would connect themselves to network management appliances 122. Also, each node may periodically communicate information about its type to network management appliances 122. Depending on the type of the inaccessible node (e.g., an edge network device or a network controller appliance), as will be described below, network management appliance 122 performs one of a first process or a second process for peer node discovery and obtaining health report for the inaccessible network node. First process will be described with reference to S304-S310 while second process will be described with reference to S312-S322.

If at S302, network management appliances 122 determine that the inaccessible node is a network controller appliance 132 then at S304 network management appliances 122 sends a panic signal to all peer network controller appliances 132 that are in full mesh with the inaccessible node. Such panic signal may be a request by network management appliances 122 to receive data on health (health data) of the inaccessible node.

In one example, all such peer network controller appliances 132 may have the same Controller Group Identification (CGID) as the inaccessible node, where CGID of each network controller appliance 132 is available to network management appliances 122 in an accessible table/database.

Thereafter at S306, one or more of peer network controller appliances 132 with same CGID that received the panic signal may acknowledge the receipt of the panic signal and the request. An ACK may be indicative of the corresponding peer network controller appliance 132 accepting the request to obtain health data on the inaccessible node while a NACK may be indicative of denial of such request by the corresponding peer network controller appliance 132.

Simultaneous with receiving an ACK, the corresponding peer network controller appliance 132 from which the ACK is received, signals the inaccessible node (inaccessible network controller appliance 132) to generate its health report. Such health report may include any information necessary for debugging the inaccessible node offline including, but not limited to, memory consumption, the processes running on a node, the configuration parameters present on the node, the software version running on the node, different software defined WAN (SDWAN) area specific debugs like control plane, data plane, forwarding, security, platform etc. That is, the corresponding network appliance 132 sends a signal to the inaccessible network controller appliance 132 asking the inaccessible network appliance 132 to generate a report on its own health and send it back to the peer network controller appliance 132.

Upon receipt of the generated health report, at S308, network management appliances 122 receive the generated health report from the corresponding peer network controller appliance 132. In one example and in addition to sending the generated health report to network management appliances 122, peer network controller appliance 132 also sends the generated health report to a remote server (e.g., Cisco^{®} Viptela server) for further analysis/diagnosis.

Thereafter, at S310, network management appliances 122 analyses the generated health report of the inaccessible node that is received at S308 to determine root cause of the loss of connection to the inaccessible node and debug/fix connectivity and/or malfunctioning issues associated with the inaccessible network management appliances 132.

For example, network management appliances 122 may analyze the health report to determine that a control plane connection between network management appliances 122 and the inaccessible node is down, after being up for a period of time. Debug commands may exactly show what control connections are up and what control connection(s) is/are down and what is the reason for control being down.

However, network management appliances 122 may determine that data plane connectivity is still intact with other nodes (e.g., edge routers/vEdges 142). Looking at the history of control connections (another debug/show command check), network management appliances 122 can determine that the inaccessible node (e.g., a vEdge 142) is not even trying to make control connections to network management appliances 122 and/or controllers 132. Thereafter, looking at configuration change on the device (this is also checked via a debug/show command), network management appliances 122 can determine that the customer/operator pushed a config onto the only present WAN interface which said "max-control-connections 0". The intention of this config is to bring down all control connections, but the data plane connections remain as is.

With all the above together, network management appliances 122 can determine that this is a user error of configuring "max-control-connections" as "0" (zero) onto the only present WAN interface on the device. If the customer (operator of inaccessible edger router 142) has given permissions to fix the issue along with diagnosis, then network management appliances 122 would just rollback this config change (the device stores a history of what config was changed at what time), which would cause all control connections to come back up. Thereafter, network management appliances 122 may generate a report of the diagnosis done and the action taken and present it on a display to a network operator.

However, if the customer did not give permissions to fix problems and wants just the diagnosis, network management appliances 122 would only generate the report of the diagnosis done and present it on the vManage.

Referring back to S302, if network management appliances 122 determines that the inaccessible node is an edge network device 142 (e.g., vEdge), then at S312, network management appliances 122 determines a "best available" peer edge network device 142 via which health report of the inaccessible node may be received (over the data plane).

In one example, a "best available" peer edge network 142 may be defined as the only available peer edge network device 142 with a BFD connectivity to the inaccessible node within network topology/organization in which the inaccessible node resides. However, when there are more than one peer edge network devices 142 (group of candidate peer edge network devices) with BFD connectivity to the inaccessible node within network topology/organization in which the inaccessible node resides, a "best available" peer edge network 142 may be defined as one of the group of candidate peer edge network devices 142 having a highest score among the group of candidate peer edge network devices 142 with BFD connectivity to the inaccessible node.

In one example, a score for a corresponding peer edge network device 142 may be determined as a weighted sum of (1) number of BFD sessions of the corresponding peer edge network device 142, (2) WAN link capacity of the corresponding peer edge network device 142; (3) WAN link cost of the corresponding peer edge network device 142; (4) average WAN link performance of the corresponding peer edge network device 142 (where performance can include, but is not limited to, link throughput, QoS measurements, packet drop rate, etc.).

Each of the above factors (1)-(4) may be assigned a weight by network management appliances 122, where each corresponding weight may be a configurable parameter determined based on experiments and/or empirical studies.

Once a score is determined for each peer edge device 142 among the group of candidate peer edge network devices 142, network management appliances 122 determine the "best available" edge network device 142 with the highest score.

Thereafter, at S314, network management appliances 122 send a panic signal to the "best available" edge network device 142, where the panic signal is the same as that described above with reference to S304 and thus will not be further described for sake of brevity.

At S316, network management appliances 122 receive a response to the panic signal from the "best available" edge network device 142.

At S318, network management appliances 122 determines if the response is an ACK or a NACK of the panic signal, where ACK/NACK is the same as described above with reference to S306 and thus will not be further described for sake of brevity.

If at S318, network management appliances 122 determines that the response is a NACK, the process reverts back to S312, where network management appliances 122 determines a next "best available" peer edge network device 142 from the group of candidate peer edge network devices 142 having a highest score after the "best available" peer edge network device previously identified and selected at S312. Thereafter, S314, S316 and S318 are repeated.

However, if at S318, network management appliances 122 determines that the response is an ACK, the selected "best available" peer edge network device 142 sends (e.g., simultaneously with sending the ACK to network management appliances 122), a request to the inaccessible node (inaccessible edge network device 142) to generate its health report and send it to it to the "best available" peer edge network device 142.

At S320, network management appliances 122 receive the generated health report from the "best available" peer edge network device 142. In one example and in addition to sending the generated health report to network management appliances 122, the "best available" peer edge network device 142 also sends the generated health report to a remote server (e.g., Cisco^{®} Viptela server) for further analysis/diagnosis.

At S322 and in the same manner as described above with reference to S310, network management appliances 122 analyze the generated health report received at S320 to determine root cause of the loss of connection to the inaccessible node and debug/fix connectivity and/or malfunctioning issues associated with the inaccessible network management appliances 132.

With above examples of peer node discovery process described, the disclosure now turns to description of device components and architectures that can be implemented as any one of network management appliances 122, network controller appliances 132, edge network devices 142, etc.

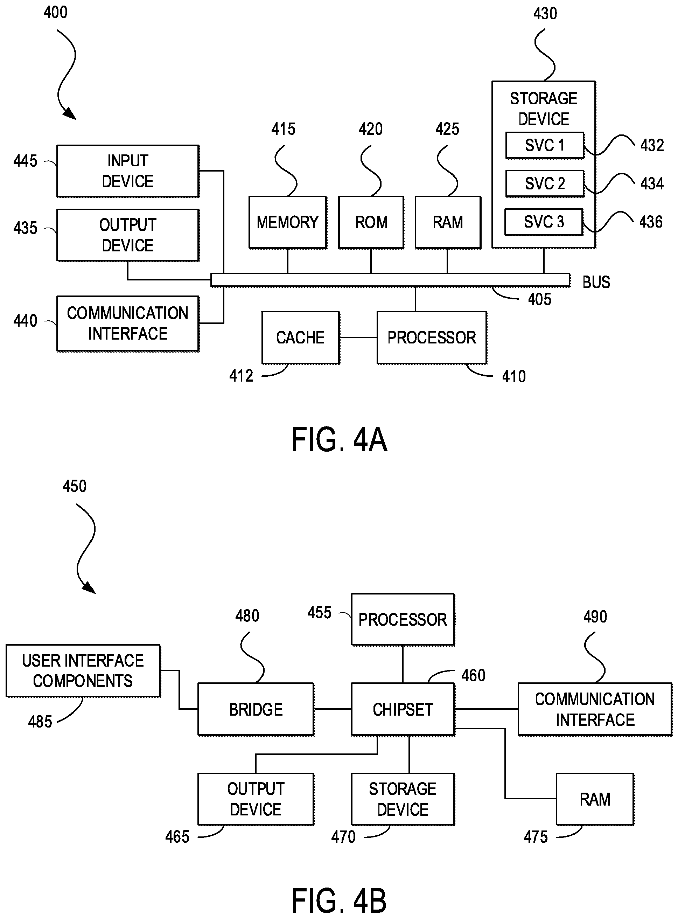

FIGS. 4A-B illustrate examples of systems, according to an aspect of the present disclosure.

FIG. 4A illustrates an example of a bus computing system 400 wherein the components of the system are in electrical communication with each other using a bus 405. The computing system 400 can include a processing unit (CPU or processor) 410 and a system bus 405 that may couple various system components including the system memory 415, such as read only memory (ROM) 420 and random access memory (RAM) 425, to the processor 410. The computing system 400 can include a cache 412 of high-speed memory connected directly with, in close proximity to, or integrated as part of the processor 410. The computing system 400 can copy data from the memory 415, ROM 420, RAM 425, and/or storage device 430 to the cache 412 for quick access by the processor 410. In this way, the cache 412 can provide a performance boost that avoids processor delays while waiting for data. These and other modules can control the processor 410 to perform various actions. Other system memory 415 may be available for use as well. The memory 415 can include multiple different types of memory with different performance characteristics. The processor 410 can include any general purpose processor and a hardware module or software module, such as SERVICE (SVC) 1 432, SERVICE (SVC) 2 434, and SERVICE(SVC) 3 436 stored in the storage device 430, configured to control the processor 410 as well as a special-purpose processor where software instructions are incorporated into the actual processor design. The processor 410 may essentially be a completely self-contained computing system, containing multiple cores or processors, a bus, memory controller, cache, etc. A multi-core processor may be symmetric or asymmetric.

To enable user interaction with the computing system 400, an input device 445 can represent any number of input mechanisms, such as a microphone for speech, a touch-protected screen for gesture or graphical input, keyboard, mouse, motion input, speech and so forth. An output device 435 can also be one or more of a number of output mechanisms known to those of skill in the art. In some instances, multimodal systems can enable a user to provide multiple types of input to communicate with the computing system 400. The communications interface 440 can govern and manage the user input and system output. There may be no restriction on operating on any particular hardware arrangement and therefore the basic features here may easily be substituted for improved hardware or firmware arrangements as they are developed.

The storage device 430 can be a non-volatile memory and can be a hard disk or other types of computer readable media which can store data that are accessible by a computer, such as magnetic cassettes, flash memory cards, solid state memory devices, digital versatile disks, cartridges, random access memory, read only memory, and hybrids thereof.

As discussed above, the storage device 430 can include the software services 432, 434, 436 for controlling the processor 410. Other hardware or software modules are contemplated. The storage device 430 can be connected to the system bus 405. In some embodiments, a hardware module that performs a particular function can include a software component stored in a computer-readable medium in connection with the necessary hardware components, such as the processor 410, bus 405, output device 435, and so forth, to carry out the function.

FIG. 4B illustrates an example architecture for a chipset computing system 450 that can be used in accordance with an embodiment. The computing system 450 can include a processor 455, representative of any number of physically and/or logically distinct resources capable of executing software, firmware, and hardware configured to perform identified computations. The processor 455 can communicate with a chipset 460 that can control input to and output from the processor 455. In this example, the chipset 460 can output information to an output device 465, such as a display, and can read and write information to storage device 470, which can include magnetic media, solid state media, and other suitable storage media. The chipset 460 can also read data from and write data to RAM 475. A bridge 480 for interfacing with a variety of user interface components 485 can be provided for interfacing with the chipset 460. The user interface components 485 can include a keyboard, a microphone, touch detection and processing circuitry, a pointing device, such as a mouse, and so on. Inputs to the computing system 450 can come from any of a variety of sources, machine generated and/or human generated.

The chipset 460 can also interface with one or more communication interfaces 490 that can have different physical interfaces. The communication interfaces 490 can include interfaces for wired and wireless LANs, for broadband wireless networks, as well as personal area networks. Some applications of the methods for generating, displaying, and using the technology disclosed herein can include receiving ordered datasets over the physical interface or be generated by the machine itself by the processor 455 analyzing data stored in the storage device 470 or the RAM 475. Further, the computing system 450 can receive inputs from a user via the user interface components 485 and execute appropriate functions, such as browsing functions by interpreting these inputs using the processor 455.

It will be appreciated that computing systems 400 and 450 can have more than one processor 410 and 455, respectively, or be part of a group or cluster of computing devices networked together to provide greater processing capability.

In summary, the present disclosure is directed to a peer node discovery process whereby a network management node can discover peers of inaccessible nodes that have lost connectivity to the network management node over the control plane and receive health report of the inaccessible nodes via the discovered peers. In one example, a method includes detecting a loss of connectivity to a network node; based on a type of the network node, performing one of a first process or a second process to obtain a health report of the network node, the first process and the second process including identification of at least one corresponding peer node from which the health report of the network node is to be received; and analyzing the health report to determine root cause of the loss of connectivity.

For clarity of explanation, in some instances the various embodiments may be presented as including individual functional blocks including functional blocks comprising devices, device components, steps or routines in a method embodied in software, or combinations of hardware and software.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, USB devices provided with non-volatile memory, networked storage devices, and so on.

Devices implementing methods according to these disclosures can comprise hardware, firmware and/or software, and can take any of a variety of form factors. Some examples of such form factors include general purpose computing devices such as servers, rack mount devices, desktop computers, laptop computers, and so on, or general purpose mobile computing devices, such as tablet computers, smart phones, personal digital assistants, wearable devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

## Claims

1. A computer-implemented method comprising:
detecting (S30) a loss of connectivity to a network node;
determining (S302) whether the network node is a controller that has lost network connectivity or an edge network device that has lost network connectivity;
performing one of a first process or a second process to obtain a health report of the network node, based on whether the network node is the controller or the edge network device,
wherein the first process includes:
identifying a plurality of additional network controllers (132), and
obtaining (S308) the health report from the plurality of additional network controllers, and
wherein the second process includes:
identifying (S312) a best available edge network device, and
obtaining (S320) the health report from the best available edge network device; and analyzing (100, S322) the health report to determine root cause of the loss of connectivity.

2. The method of claim 1, further comprising:
determining that the network node is the controller; and
performing the first process to obtain the health report of the network node.

3. The method of claim 2, wherein the first process comprises:
sending (S304) a panic signal to each of the plurality of additional network controllers;
receiving (S306) an acknowledgement from one or more of the plurality of additional network controllers in response to the panic signal; and
receiving (S308) the health report of the network node from one or more of the plurality of additional network controllers.

4. The method of claim 3, wherein the plurality of additional network controllers are in full mesh with the network node and have a same controller group identifier as the network node.

5. The method of any of claims 1 to 4, further comprising:
identifying the network node as the edge network device; and
performing the second process to obtain the health report of the network node.

6. The method of claim 5, wherein the second process comprises:
identifying (S312) the best available edge network device over a data plane of a corresponding network;
sending (S314) a panic signal to the best available edge network device;
receiving (S316) an acknowledgement from the best available edge network device in response to the panic signal; and
receiving (S320) the health report of the network node from the best available edge network device.

7. The method of claim 1, wherein identifying the best available edge network device comprises:
determining a weighted score for each candidate edge network device within each zone in which the network node resides; and
selecting a candidate edge network device with the highest weighted score among all candidate peer edge network devices, as the best available edge network device.

8. The method of claim 7, wherein the weighted score is a weighted sum of a plurality of factors for a corresponding candidate edge network device, each of the plurality of factors being indicative of a performance characteristic of the corresponding candidate edge network device.

9. An apparatus comprising:
means for detecting (S30) a loss of connectivity to a network node;
means for determining (S302) whether the network node is a controller that has lost network connectivity or an edge network device that has lost network connectivity;
means for performing, based on whether the network node is the controller or the edge network device, one of a first process or a second process to obtain a health report of the network node,
wherein the first process includes:
identifying a plurality of additional network controllers (132), and
obtaining (S308) the health report from the plurality of additional network controllers, and
wherein the second process includes:
identifying (S312) a best available edge network device, and
obtaining (S320) the health report from the best available edge network device; and
means for analyzing (100, S322) the health report to determine root cause of the loss of connectivity.

10. The apparatus according to claim 9 further comprising means for implementing the method according to any of claims 2 to 8.

11. A computer program, computer program product or computer readable medium comprising instructions which, when executed by a computer, cause the computer to carry out the steps of the method of any of claims 1 to 8.

## Patentansprüche

1. Ein computerimplementiertes Verfahren, das Folgendes umfasst:
Detektieren (S30) eines Verlusts von Konnektivität zu einem Netzwerkknoten;
Bestimmen (S302), ob der Netzwerkknoten ein Controller ist, der Netzwerkkonnektivität verloren hat, oder eine Edge-Netzwerkvorrichtung ist, die Netzwerkkonnektivität verloren hat;
Durchführen von einem eines ersten Prozesses oder eines zweiten Prozesses, um einen Gesundheitsbericht für den Netzwerkknoten zu erhalten, basierend darauf, ob der Netzwerkknoten der Controller oder die Edge-Netzwerkvorrichtung ist, wobei der erste Prozess Folgendes beinhaltet:
Identifizieren einer Vielzahl von zusätzlichen Netzwerkcontrollern (132) und
Erhalten (S308) des Gesundheitsberichts von der Vielzahl von zusätzlichen Netzwerkcontrollern, und
wobei der zweite Prozess Folgendes beinhaltet:
Identifizieren (S312) einer besten verfügbaren Edge-Netzwerkvorrichtung und
Erhalten (S320) des Gesundheitsberichts von der besten verfügbaren Edge-Netzwerkvorrichtung; und
Analysieren (100, S322) des Gesundheitsberichts, um die Grundursache des Verlusts von Konnektivität zu bestimmen.

2. Das Verfahren nach Anspruch 1, das ferner Folgendes umfasst:
Bestimmen, dass der Netzwerkknoten der Controller ist; und
Durchführen des ersten Prozesses, um den Gesundheitsbericht für den Netzwerkknoten zu erhalten.

3. Das Verfahren nach Anspruch 2, wobei der erste Prozess Folgendes umfasst:
Senden (S304) eines Paniksignals an jeden der Vielzahl von zusätzlichen Netzwerkcontrollern;
Empfangen (S306) einer Bestätigung von einem oder mehreren der Vielzahl von zusätzlichen Netzwerkcontrollern als Reaktion auf das Paniksignal; und
Empfangen (S308) des Gesundheitsberichts für den Netzwerkknoten von einem oder mehreren der Vielzahl von zusätzlichen Netzwerkcontrollern,

4. Das Verfahren nach Anspruch 3, wobei die Vielzahl von zusätzlichen Netzwerkcontrollern mit dem Netzwerkknoten voll vermascht sind und eine gleiche Controllergruppenkennung wie der Netzwerkknoten aufweisen.

5. Das Verfahren nach einem der Ansprüche 1 bis 4, das ferner Folgendes umfasst:
Identifizieren des Netzwerkknoten als die Edge-Netzwerkvorrichtung; und
Durchführen des zweiten Prozesses, um den Gesundheitsbericht für den Netzwerkknoten zu erhalten.

6. Das Verfahren nach Anspruch 5, wobei der zweite Prozess Folgendes umfasst:
Identifizieren (S312) der besten verfügbaren Edge-Netzwerkvorrichtung über einer Datenebene eines entsprechenden Netzwerks;
Identifizieren (S314) eines Paniksignals an die beste verfügbare Edge-Netzwerkvorrichtung;
Empfangen (S316) einer Bestätigung von der besten verfügbaren Edge-Netzwerkvorrichtung als Reaktion auf das Paniksignal; und
Empfangen (S320) des Gesundheitsberichts für den Netzwerkknoten von der besten verfügbaren Edge-Netzwerkvorrichtung.

7. Das Verfahren nach Anspruch 1, wobei das Identifizieren der besten verfügbaren Edge-Netzwerkvorrichtung Folgendes umfasst:
Bestimmen eines gewichteten Scores für jede Kandidaten-Edge-Netzwerkvorrichtung innerhalb jeder Zone, in der der Netzwerkknoten residiert; und
Auswählen einer Kandidaten-Edge-Netzwerkvorrichtung mit dem höchsten gewichteten Score unter allen Kandidaten-Edge-Netzwerkvorrichtungen als die beste verfügbare Edge-Netzwerkvorrichtung.

8. Das Verfahren nach Anspruch 7, wobei der gewichtete Score eine gewichtete Summe einer Vielzahl von Faktoren für eine entsprechende Kandidaten-Edge-Netzwerkvorrichtung ist, wobei jeder der Vielzahl von Faktoren für ein Leistungscharakteristikum der entsprechenden Kandidaten-Edge-Netzwerkvorrichtung indikativ ist.

9. Eine Einrichtung, die Folgendes umfasst:
ein Mittel zum Detektieren (S30) eines Verlusts von Konnektivität zu einem Netzwerkknoten;
ein Mittel zum Bestimmen (S302), ob der Netzwerkknoten ein Controller ist, der Netzwerkkonnektivität verloren hat, oder eine Edge-Netzwerkvorrichtung ist, die Netzwerkkonnektivität verloren hat;
ein Mittel zum Durchführen, basierend darauf, ob der Netzwerkknoten der Controller oder die eine Edge-Netzwerkvorrichtung ist, von einem eines ersten Prozesses oder eines zweiten Prozesses, um einen Gesundheitsbericht für den Netzwerkknoten zu erhalten,
wobei der erste Prozess Folgendes beinhaltet:
Identifizieren einer Vielzahl von zusätzlichen Netzwerkcontrollern (132) und
Erhalten (S308) des Gesundheitsberichts von der Vielzahl von zusätzlichen Netzwerkcontrollern, und
wobei der zweite Prozess Folgendes beinhaltet:
Identifizieren (S312) einer besten verfügbaren Edge-Netzwerkvorrichtung und
Erhalten (S320) des Gesundheitsberichts von der besten verfügbaren Edge-Netzwerkvorrichtung; und
ein Mittel zum Analysieren (100, S322) des Gesundheitsberichts, um die Grundursache des Verlusts von Konnektivität zu bestimmen.

10. Die Einrichtung nach Anspruch 9, die ferner Mittel zum Implementieren des Verfahrens gemäß einem der Ansprüche 2 bis 8 umfasst.

11. Ein Computerprogramm, Computerprogrammprodukt oder computerlesbares Medium, die Anweisungen umfassen, die, wenn sie von einem Computer ausgeführt werden, den Computer dazu veranlassen, die Schritte des Verfahrens nach einem der Ansprüche 1 bis 8 zu vollführen.

## Revendications

1. Procédé mis en oeuvre par ordinateur comprenant :
la détection (S30) d'une perte de connectivité à un noeud de réseau ;
la détermination (S302) pour savoir si le noeud de réseau est un organe de commande qui a perdu la connectivité de réseau ou un dispositif de réseau périphérique qui a perdu la connectivité de réseau ;
la réalisation d'un processus parmi un premier processus ou un deuxième processus afin d'obtenir un rapport de santé du noeud de réseau, sur la base du fait de savoir si le noeud de réseau est l'organe de commande ou le dispositif de réseau périphérique,
dans lequel le premier processus inclut :
le fait d'identifier une pluralité d'organes de commande de réseau additionnels (132), et
le fait d'obtenir (S308) le rapport de santé en provenance de la pluralité d'organes de commande de réseau additionnels, et
dans lequel le deuxième processus inclut :
le fait d'identifier (S312) un dispositif de réseau périphérique ayant la meilleure disponibilité, et
le fait d'obtenir (S320) le rapport de santé en provenance du dispositif de réseau périphérique ayant la meilleure disponibilité ; et
l'analyse (100, S322) du rapport de santé pour déterminer la cause fondamentale de la perte de connectivité.

2. Procédé de la revendication 1, comprenant en outre :
la détermination que le noeud de réseau est l'organe de commande ; et
la réalisation du premier processus afin d'obtenir le rapport de santé du noeud de réseau.

3. Procédé de la revendication 2, dans lequel le premier processus comprend :
l'envoi (S304) d'un signal de panique à chaque organe de commande de la pluralité d'organes de commande de réseau additionnels ;
la réception (S306) d'un accusé de réception en provenance d'un ou de plusieurs organes de commande de la pluralité d'organes de commande de réseau additionnels en réaction au signal de panique ; et
la réception (S308) du rapport de santé du noeud de réseau en provenance d'un ou de plusieurs organes de commande de la pluralité d'organes de commande de réseau additionnels.

4. Procédé de la revendication 3, dans lequel la pluralité d'organes de commande de réseau additionnels sont en maillage intégral avec le noeud de réseau et ont un même identifiant de groupe d'organes de commande que le noeud de réseau.

5. Procédé de n'importe lesquelles des revendications 1 à 4, comprenant en outre :
l'identification du noeud de réseau comme étant le dispositif de réseau périphérique ; et
la réalisation du deuxième processus afin d'obtenir le rapport de santé du noeud de réseau.

6. Procédé de la revendication 5, dans lequel le deuxième processus comprend :
l'identification (S312) du dispositif de réseau périphérique ayant la meilleure disponibilité sur un plan de données d'un réseau correspondant ;
l'envoi (S314) d'un signal de panique au dispositif de réseau périphérique ayant la meilleure disponibilité ;
la réception (S316) d'un accusé de réception en provenance du dispositif de réseau périphérique ayant la meilleure disponibilité en réaction au signal de panique ; et
la réception (S320) du rapport de santé du noeud de réseau en provenance du dispositif de réseau périphérique ayant la meilleure disponibilité.

7. Procédé de la revendication 1, dans lequel l'identification du dispositif de réseau périphérique ayant la meilleure disponibilité comprend :
le fait de déterminer un score pondéré pour chaque dispositif de réseau périphérique candidat au sein de chaque zone dans laquelle réside le noeud de réseau ; et
la sélection d'un dispositif de réseau périphérique candidat avec le score pondéré le plus élevé parmi tous les dispositifs de réseau périphérique candidats, comme étant le dispositif de réseau périphérique ayant la meilleure disponibilité.

8. Procédé de la revendication 7, dans lequel le score pondéré est une somme pondérée d'une pluralité de facteurs pour un dispositif de réseau périphérique candidat correspondant, chaque facteur de la pluralité de facteurs étant indicatif d'une caractéristique de performance du dispositif de réseau périphérique candidat correspondant.

9. Appareil comprenant :
des moyens pour détecter (S30) une perte de connectivité à un noeud de réseau ;
des moyens pour déterminer (S302) si le noeud de réseau est un organe de commande qui a perdu la connectivité de réseau ou un dispositif de réseau périphérique qui a perdu la connectivité de réseau ;
des moyens pour réaliser, sur la base du fait de savoir si le noeud de réseau est l'organe de commande ou le dispositif de réseau périphérique, un processus parmi un premier processus ou un deuxième processus afin d'obtenir un rapport de santé du noeud de réseau,
dans lequel le premier processus inclut :
le fait d'identifier une pluralité d'organes de commande de réseau additionnels (132), et
le fait d'obtenir (S308) le rapport de santé en provenance de la pluralité d'organes de commande de réseau additionnels, et
dans lequel le deuxième processus inclut :
le fait d'identifier (S312) un dispositif de réseau périphérique ayant la meilleure disponibilité, et
le fait d'obtenir (S320) le rapport de santé en provenance du dispositif de réseau périphérique ayant la meilleure disponibilité ; et
des moyens pour analyser (100, S322) le rapport de santé pour déterminer la cause fondamentale de la perte de connectivité.

10. Appareil selon la revendication 9 comprenant en outre des moyens pour mettre en oeuvre le procédé de n'importe lesquelles des revendications 2 à 8.

11. Programme informatique, produit à programme informatique ou support lisible par ordinateur comprenant des instructions qui, lorsqu'elles sont exécutées par un ordinateur, amènent l'ordinateur à réaliser les étapes du procédé de n'importe lesquelles des revendications 1 à 8.
